Europäisches Patentamt

European Patent Office

Office européen des brevets

(19)

(11) Publication number: **0 419 175 A1**

# EUROPEAN PATENT APPLICATION

(12)

(21) Application number: **90310139.2**

(22) Date of filing: **17.09.90**

(51) Int. Cl.5: **A01D 34/82**

(30) Priority: **18.09.89 GB 8921092**

(43) Date of publication of application:
**27.03.91 Bulletin 91/13**

(84) Designated Contracting States:
**DE GB NL**

(71) Applicant: **QUALCAST GARDEN PRODUCTS LTD.**
**Sunnyhill**
**Derby, DE3 7JT(GB)**

(72) Inventor: **Gray, Philip**
**c/o Roberts Weaver**
**7 Westbourne Grove Mews London W11 2SA(GB)**
Inventor: **Williams, Stephen**
**c/o Roberts Weaver**
**7 Westbourne Grove Mews London W11 2SA(GB)**

(74) Representative: **Sanders, Peter Colin Christopher et al**
**BROOKES & MARTIN High Holborn House**
**52/54 High Holborn**
**London WC1V 6SE(GB)**

(54) **Improvements in or relating to lawnmowers.**

(57) A walk-behind lawnmower wherein a handle (10, 11, 12) for steering the mower carries at least one manually operable control member (251, 21) for controlling at least one operating function of the mower. Each control member (21, 251) is carried by at least one module (14, 240a, 240b) in a modular control unit (13) supported by the handle.

FIG.2

EP 0 419 175 A1

## IMPROVEMENTS IN OR RELATING TO LAWNMOWERS

This invention relates to a powered garden machine, such as a lawnmower.

A modern petrol driven lawnmower is frequently produced in a number of different versions. The various controls for the different versions are generally scattered about the handle of the mower, each version having its own particular control layout. This generally inflexible arrangement obviously adds to the cost of producing the different versions.

For example, one version may comprise a self-propelled land drive machine which requires an actuating lever to engage the land drive wheels with the engine driving the cutter blade, while another version may be manually pushed over the ground. In either case, the mower may or may not have an electric key start for starting the engine. Still other versions may include a control for engaging reverse drive, and/or a cutter drive control. In general, however, all versions will include some form of throttle control for the engine.

It would be an advantage if each of these different versions could be produced without substantially altering the control layout of the machine.

According to one aspect of the present invention, there is provided a handle for a powered garden machine, such as a lawnmower, the handle incorporating a modular control unit, and the unit comprising a plurality of discrete modules at least one of which carries a manually operable control member for controlling an operating function of the mower. Modules which do not carry control members may comprise spacer modules. In this manner, different versions of the machine can be produced simply by replacing one control module for another control module and/or by replacing one or more spacer modules with a control module. The control modules may comprise, for example, a throttle control module, a key switch module for electric starting of the engine, an operator presence module, and a pair of modules for retaining opposite ends of a generally U-shaped land drive control bar.

Each module preferably comprises a segment of a generally tubular body, such as a cylinder, the tubular segment modules being mounted side by side on a common spindle to form the modular unit.

The modules may include a pair of end modules for receiving respective parallel members of the mower handle such that the control bar extends horizontally between the two members.

Each module may have a fixed, predetermined orientation on the spindle but the bar may also include at least one control module which is rotatable about the central spindle through a predetermined angle when the associated control member is actuated, for example to engage the engine with the wheels in a land drive version.

By way of example only, an embodiment of the invention is illustrated in the accompanying drawings in which:

Fig. 1 is a perspective sketch of a handle for a lawnmower driven by an internal combustion engine, the handle incorporating a control bar embodying the invention and viewed from behind the mower;

Fig. 2 is a perspective sketch of the handle shown in Fig. when viewed from the front of the mower;

Fig. 3 is a longitudinal section through the control bar; and

Fig. 4 is a transverse section through the throttle control module.

Referring to these drawings, the mower handle consists of a pair of forks 10, 11 inter-connected by a generally semi-circular hand-grip 12. The hand-grip is bent upwardly from the plane of the two forks such that, in practice, with the lower ends of the forks 10, 11 connected to the mower housing (not shown) the semi-circular hand-grip 12 is approximately vertical.

A generally horizontal modular control bar 13 is fitted across the top ends of the forks 10, 11. The control bar consists of a number of modules mounted on a common spindle 243. The modules are generally cylindrical and of circular cross-section but other cross-sections such as octagonal, and other formed shapes could equally well be used. The profile of the spindle 243 which may be formed as an extrusion, is such that some of the modules are fixed on the spindle with a predetermined orientation while others are rotatable about the spindle. In either case, the modules may slidably engage the spindle or they may be of clam-shell construction.

In one alternative (not illustrated) the spindle comprises a round bar, and the individual modules interlock with one another along the spindle.

The control bar 13 comprises a throttle control module 14, a pair of land drive modules 240a, 240b, an RH spacer module and a pair of substantially identical handle-clamping modules 15, 16 at the respective ends.

The handle-clamping modules 15, 16 are each fitted with end caps 232 and each comprise opposed pairs of inner and outer handle clamps 227 which co-operate to clamp the respective tubular forks 10, 11. The clamps 227 are secured to the spindle 243 by a screw 259 with a washer 260. In addition, the inner clamps are fixed to the spindle by self-tapping screws 261 (only one of the screws being shown in the drawing) for convenience during assembly.

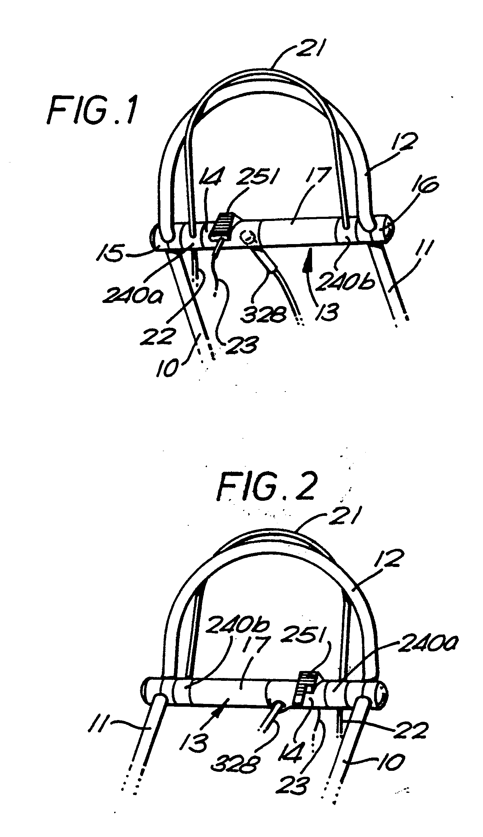

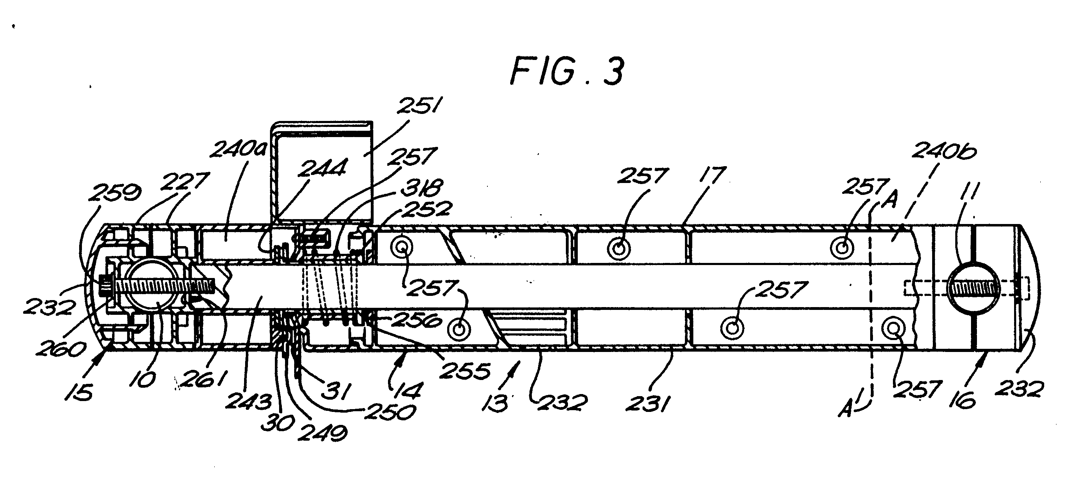

In non land-drive versions of the mower, the RH spacer 17 is extended to abut the end module 16 and the RH drive module 2400 is omitted. Such an arrangement is shown in fig. 3 where the dashed line A-A indicates the position of the junction between the short RH spacer 17 and the drive module 240b in the land-drive version shown in Figs. 1 and 2.

In the land drive version of the lawnmower (as illustrated in Figs. 1 and 2), the modules 240a, 240b each pivot about the spindle 243 in response to actuation of a U-shaped bar 21 (see Figs. 1 and 2). This land drive control bar 21 is closed against the hand-grip 12 to tension a cable 22 connected to the clutch mechanism between the mower engine and the ground wheels. This type of control arrangement is already known and is not therefore described in further detail. In the non land-drive version, the LH spacer 240a is keyed to the end module 15 to prevent rotation.

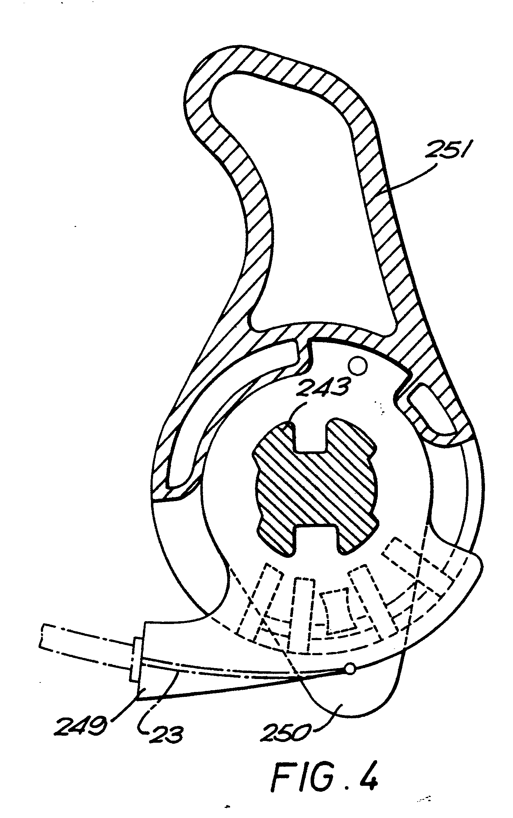

The throttle module 14 consists of a throttle lever 251 connected to a moving plate 250, the bottom of the plate being connected to the throttle cable 23 as best shown in Fig. 4. The moving plate 250 rotates about a bearing bush 252 which is clinched to a fixed plate 249 pegged to the spindle 243. The moving plate 250 is urged against the fixed plate 249 by a compression spring 318, the fixed plate 249 having raised protuberances 30 co-operating with a projection 31 on the moving plate 250 to define stop, slow, fast and choke positions of the throttle in a well known manner.

The moving plate 250 is secured to the lever 251 by a retaining screw 257, the assembly also including a nylon washer 244, a wavy washer 255 to accommodate tolerances, and a further washer 256.

The short or long RH spacer 17 is of clam-shell construction, being half split into a top and bottom section, each section being fixed with screws 257 and locating on the spindle 243 for correct orientation.

The bottom half 231 of the RH spacer 17 is provided with a hole 232 for receiving a key switch 328 (Figs. 1 and 2) when such a switch is fitted to enable electric starting of the engine. Tn versions where no such switch is fitted, the hole 232 in the moulding is blanked.

## Claims

1. A walk-behind lawnmower wherein a handle (10, 11, 12) for steering the mower carries at least one manually operable control member (251, 21) for controlling respective operating functions of the mower, characterised in that the or each control member (21, 251) is carried by at least one module (14, 240a, 240b) in a modular control unit (13) supported by the handle.

2. A lawnmower according to claim 1 wherein the modular control unit (13) comprises a plurality of modules (14, 15, 16, 17, 240a, 240b) mounted side by side on a common spindle (243).

3. A lawnmower according to claim 2 wherein the modules include at least one blank or inoperative spacer module (17).

4. A lawnmower according to claim 2 or claim 3 wherein the modules includes a pair of end modules (15, 16) respectively secured to a pair of spaced generally parallel members (10, 11) of the handle such that the unit extends transversely between the handle members.

5. A lawnmower according to claim 2 wherein the modules are slidably engagable with the spindle (243) or are of clam-shell construction, and at least one of the modules has a fixed predetermined orientation relative to the spindle.

6. A lawnmower according to claim 5 whe, at least one other of the modules (14) is rotatable about the spindle (243).

7. A lawnmower according to any one of the preceding claims in which one of the control modules (14) carries a throttle actuating member (251) for controlling an engine or motor powering the mower.

FIG.1

FIG.2

# FIG.3

251

243

249  23  250

# FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 704 847 (GREIDER ET AL.)<br>* the whole document *<br>— — — | 1,2,7 | A 01 D 34/82 |
| A | US-A-4 813 214 (BARNARD ET AL.)<br>* the whole document *<br>— — — | 1,2,5-7 | |
| A | FR-A-2 565 711 (OUTILS WOLF)<br>* page 3, line 32 - page 4, line 7; figures 2-4 *<br>— — — | 1,4 | |
| A | AU-B-4 407 48 (VICTA)<br>* page 3, line 18 - page 5, line 3; figures 1-4 *<br>— — — | 5,7 | |
| A | FR-A-2 222 932 (FLYMO)<br>— — — | | |
| A | EP-A-0 224 826 (GUTBROD-WERKE)<br>— — — — — | | |
| | | | TECHNICAL FIELDS SEARCHED (Int. Cl.5)<br><br>A 01 D |

The present search report has been drawn up for all claims

| Place of search | Date of completion of search | Examiner |
|---|---|---|
| The Hague | 17 December 90 | WILLIAMS M.J. |